# EUROPÄISCHE PATENTANMELDUNG

(11) **EP 0 682 092 A1**
(43) Veröffentlichungstag der Anmeldung: **15.11.1995**
(21) Anmeldenummer: 95104875.0
(22) Anmeldetag: 01.04.1995
(51) Int. Cl.: C09D 5/26

(54) **Thermisch farb-beeinflussbare Lackierung**

(30) Priorität: 13.05.1994 DE 4416993
(71) Anmelder: DAIMLER-BENZ AKTIENGESELLSCHAFT, D-70567 Stuttgart (DE)
(72) Erfinder: Gailberger, Michael, Dr. Chem., D-89231 Neu-Ulm (DE); Barth, Anne, D-89231 Neu-Ulm (DE); Kricheldorf, Hans Rütger, Prof. Dr., D-20146 Hamburg (DE); Gurau, Mihai, D-79106 Freiburg (DE); Vill, Volkmar, Dr., D-20146 Hamburg (DE); Berghahn, Matthias, D-47809 Krefeld (DE)

(57) **Zusammenfassung**

Die Erfindung befaßt sich mit dem neuartigen Farblackieren insbesondere von Fahrzeugkarosserien. Der Lack-Körper besteht im wesentlichen aus einem aushärtbaren flüssigkristallinen Polymer (LCP), wobei die farbliche Erscheinung des Lackes durch interferentiell wirkende Mesogene des Lack-Körpers bestimmt ist, die sich bei der Lack-Applikation selbsttätig quer zur Gegenstandsoberfläche ausrichten, sich chiral-nematisch anordnen und in dieser Anordnung eine in ihrer Ganghöhe thermisch beeinflußbare Helix bilden. Die flüssigkristallinen Polymere sind zum einen derart ausgewählt, daß sie thermisch nicht vernetzbar sind und zum anderen derart, daß das Temperaturniveau, bei dem die Ganghöhe der Helix beeinflußbar ist, oberhalb der Gebrauchstemperatur des zu lackierenden Gebrauchsgegenstandes liegt. Durch Erwärmung der applizierten, aber noch unvernetzten Lackschicht auf eine bestimmte, innerhalb des genannten Temperaturbereiches liegende Temperatur wird die aufgetragene Lackschicht auf eine bestimmte, interferentiell wirksame Farbwirkung in-situ, d.h. erst auf dem Gebrauchsgegenstand eingestellt. Anschließend erst wird die thermisch eingestellte, interferentielle Farbwirkung stabilisiert, und zwar durch rasches Abkühlen und/oder durch UV-Bestrahlung der Lackschicht. Die farbbestimmende Substanz des Lack-Körpers und die wesentliche Substanz des Lack-Körpers selber sind somit identisch und bilden eine zusammenhängend-homogene Lage aus einem ausgehärteten flüssigkristallinen Polymer.

## Beschreibung

Die Erfindung geht aus von einem farbigen Lack zum Lackieren von Gebrauchsgegenständen, insbesondere Fahrzeugkarosserien nach dem Oberbegriff von Anspruch 1, ferner geht sie aus von einem farbig lackierten Gebrauchsgegenstand nach dem Oberbegriff von Anspruch 4 und von einem Verfahren zum farbgebenden Lackieren von Gebrauchsgegenständen nach dem Oberbegriff von Anspruch 10.

Übliche Lacke bzw. applizierte Lackierungen weisen farbgebende, in einen klaren Lack-Körper eingelagerte Pigmente auf, wobei es sich bei den Pigmenten in der Regel um Absorptionspigmente handelt, die bis auf ein spektral schmales, der eigenen Farbtönung entsprechendes Band alle übrigen Frequenzen des sichtbaren Lichtes absorbieren. Daneben gibt es auch Effektlacke, bei denen die Pigmente aus metallisch glänzenden Flittern oder aus kleinen, mit einem Perlglanzüberzug versehenen Plättchen bestehen. Die EP 383 376 A1 beschreibt einen solchen Effektlack, bei dem kleine Glimmerplättchen allseits gleichmäßig mit einem vernetzten, flüssigkristallinen Polymer (LCP) in chiral-nematischer Anordnung beschichtet sind. Die Farberscheinung derartiger Pigmente kommt durch eine Interferenzerscheinung zustande. Von dem einfallenden Licht werden nur diejenigen Lichtwellen reflektiert, deren Wellenlänge mit den äquidistanten Netzebenenabständen der flüssigkristallininen Polymere interferiert, wogegen die Lichtanteile anderer Wellenlängen durch den klaren Lack-Körper hindurchgehen und von dem - vorzugsweise - dunklen Untergrund absorbiert werden. Derartige, plättchenförmige, parallel zur lackierten Oberfläche ausgerichtete Interferenzpigmente haben bei orthogonaler Betrachtung eine bestimmte erste Farbe - Basisfarbe - und unter einer geneigten Betrachtungsrichtung eine zweite, kürzerwellige Farbe. Diese vom Betrachtungswinkel abhängige Farberscheinung der lackierten Oberfläche macht die Lackierung sehr effektvoll und für bestimmte Anwendungsfälle, bei denen derartige Farbeffekte vom Kunden positiv aufgenommen werden, sehr wünschenswert. Nachteilig ist nicht nur die aufwendige Herstellung der Interferenzpigmente, sondern auch der Umstand, daß für jede gewünschte Basisfarbe des Lackes ein anderes Pigment benötigt wird. Dadurch gestaltet sich der Effektlack in einer breiten Farbpalette und dementsprechend die Effektlackierung auf dem Gebrauchsgegenstand recht kostspielig.

Eine Bedingung für das Auftreten von flüssigkristallinen Phasen ist eine starre mesogene Molekülgestalt. Die Repetitionseinheiten flüssigkristalliner Polymere enthalten die mesogenen Einheiten. Die beiden am häufigsten realisierten Molekülstrukturen sind die Seitenketten-LC-Polymere, bei denen die mesogenen Einheiten als Seitenketten des Polymerrückgrates chemisch fixiert sind, und die Hauptketten-LC-Polymere, bei denen die mesogenen Einheiten das Polymerrückgrat oder Teil des Polymerrückgrates bilden. Neben den Homopolymeren sind eine Vielzahl von Copolymeren darstellbar, die verschiedene mesogene Einheiten oder nicht-mesogene und mesogene Einheiten enthalten können.

Die EP 303 258 B1 beschreibt ein Verfahren zum Pulverbeschichten eines Metallsubstrates, und zwar soll die Schutzbeschichtung widerstandsfähig sein und mechanisch fest auf dem Untergrund haften. Die Schutzbeschichtung ist aus einem pulverisierten hochschmelzenden Copolymer mit bestimmten Einheiten - Terephthalsäurederivaten - in der Hauptkette und mit zwei bestimmten Seitenketten - phenylsubstituierte Hydrochinone - gebildet. Für die schmelzflüssige, im Bereich von 330 bis 365 °C vorliegende Phase des Copolymer werden bestimmte Viskositätsangaben und sonstige rheologische Angaben gemacht; außerdem verhält es sich im flüssigen Zustand optisch anisotrop. Von dem Copolymer wird in einer zweckmäßigen Ausgestaltung eine flüssigkristalline Eigenschaft verlangt. Das pulverisierte Copolymer wird auf das vorerhitzte Metallsubstrat vorzugsweise in einer Lagenstärke von etwa 75 µm aufgeschmolzen. Anschließend wird das Metallsubstrat und mit ihm die Beschichtung z.B. in Wasser abgeschreckt.

Aufgabe der Erfindung ist es, den gattungsgemäßen Lack bzw. die damit herstellbare Lackierung dahingend weiterzubilden, daß Effektlacke bzw. -lackierungen in allen möglichen Farben der Farbpalette auf einfachere Weise und mit weniger Kostenaufwand hergestellt werden können.

Diese Aufgabe wird bezüglich der unterschiedlichen Kategorien - Lack, Lackierung und Applikationsverfahren - bei Zugrundelegung der jeweiligen Gattungen erfindungsgemäß durch die kennzeichnenden Merkmale von Anspruch 1, von Anspruch 4 bzw. von Anspruch 10 gelöst.

Die vorliegende Erfindung beinhaltet demnach die Verwendung von Hauptketten-LC-Polymeren als homogener Effektlack, bei dem Effektlackpigmente und Lack-Körper identisch sind. Wesentlich dabei ist, daß die gewünschte Effektfarbe erst nach der Applikation des Lackes auf dem Gebrauchsgegenstand eingestellt wird. Es können alle Farben des Spektrums aus ein und demselben Lack dargestellt oder sogar nachträglich geändert werden.

Die zu verwendenden oder in Frage kommenden Substanzen sind ohne zu vernetzen aushärtbar und bleiben in diesem ausgehärteten unvernetzten Zustand thermisch weiterhin in ihrer Effektfarbe beeinflußbar. Daneben sind die Substanzen selbstverständlich auch - und zwar photochemisch - vernetzbar, was aber für die guten mechanischen Eigenschaften der Polymere nicht von entscheidender Bedeutung ist. In vernetztem Zustand ist die Effektfarbe des Polymers nicht mehr thermisch einstellbar.

Die weiter unten in den Beispielen beschriebenen Substanzen bilden chiral nematische Phasen aus. Die Hauptketten-LC-Polymere gehören aufgrund ihrer chemischen Struktur zu den hochtemperaturbeständigen Polymeren, die sich durch sehr gute mechanische Eigenschaften wie eine hohe Steifigkeit, Festigkeit und Härte auszeichnen, was bei Verwendung der Polymere als Außenlackierung von besonderem Vorteil ist.

Die Reflektionswellenlänge chiral nematischer Flüssigkristalle wird durch die Ganghöhe der Helix bestimmt, die von den mesogenen Gruppen gebildet wird. Die Ganghöhe der Helix ist im unvernetzten Zustand eine Funktion der Temperatur, so daß die Reflektionsfarbe ein Temperaturindikator ist. Und zwar ist die Helix-Ganghöhe umgekehrt proportional zur Absoluttemperatur des Polymers. Umgekehrt läßt sich durch die Temperatur die Reflektionswellenlänge der chiral nematischen Flüssigkristalle einstellen. Der Übergang in die chiral nematische Phase erfolgt bei den vorliegenden Polymeren, vorzugsweise bei dem in den Beispielen beschriebenen Polymer 5, bei Temperaturen, die deutlich oberhalb der Gebrauchstemperatur liegen (beispielsweise 170 °C). Das Polymer 5 hat bei dieser Temperatur z.B. eine rote Reflektionsfarbe. Temperaturerhöhung bewirkt eine Verschiebung der Reflektionsfarbe in den kurzwelligen Bereich des sichtbaren Spektrums. Durch genaue Temperatureinstellung lassen sich sämtliche Reflektionswellenlängen des sichtbaren Spektrums einstellen.

Die Reflektionsfarben lassen sich durch schnelles Abkühlen der beschichteten Werkstücke dauerhaft konservieren, die so eingestellte Reflektion verändert sich erst bei erneutem Erhitzen auf 170 °C (Polymer 5). Wird eine Schicht des unvernetzten Polymers erneut erhitzt, lassen sich andere oder die gleiche Reflektionswellenlänge wie zuvor einstellen, der Prozeß ist reversibel. Soll die Reflektionswellenlänge dauerhaft konserviert werden, kann die Polymerschicht durch Einstrahlung von UV-Licht vernetzt werden. Die eingestellte Reflektionswellenlänge bleibt dann bis zur Zersetzung (z.B. 300 °C bei Polymer 5) des Polymers stabil.

Die Anwendung als homogener Lack kann in Lösung (z. B. gelöst in N-Methylpyrrolidon oder N,N-Dimethylformamid) oder durch Rakeln des Polymeren oder als Pulverlack in der Schmelze erfolgen.

Die Orientierung der Polymeren, vorzugsweise des Polymers 5, erfolgt durch gängige Methoden (Rakeln, Scheren) und besonders gut durch eine Polyimid-Orientierungsschicht, wiederum vorzugsweise beim Polymer 5, da es auch Imidgruppen enthält.

Weitere zweckmäßige Ausgestaltungen der Erfindung ergeben sich aus den jeweiligen Unteransprüchen. Im übrigen sind nachfolgend noch einige Beispiele - zum Teil unter Bezugnahme auf die graphischen Darstellungen - beschrieben. In den Figuren zeigen:
- Fig. 1: eine tabellarische Übersicht über vier verschiedene photovernetzbare Polymere und deren Eigenschaften, die u. a. im Zusammenhang mit der vorliegenden Erfindung in Betracht gezogen und untersucht worden sind, von denen aber nur eines der Polymere weiterverfolgt wurde,
- Fig. 2: eine weitere tabellarische Übersicht über sechs verschiedene Polymere, die für die Zwecke der vorliegenden Erfindung geeignet sind,

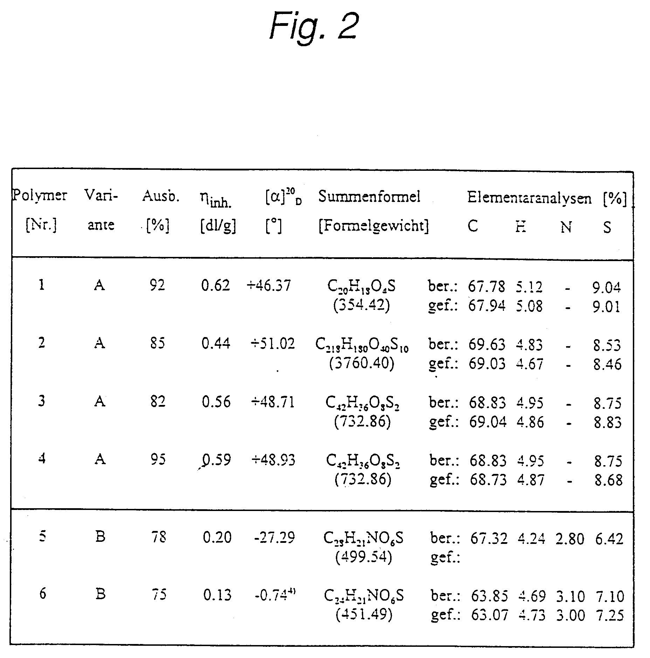

- Fig. 2 bis 8: Strukturformeln der sechs verschiedenen Polymere nach der Tabelle gemäß Figur 2 und

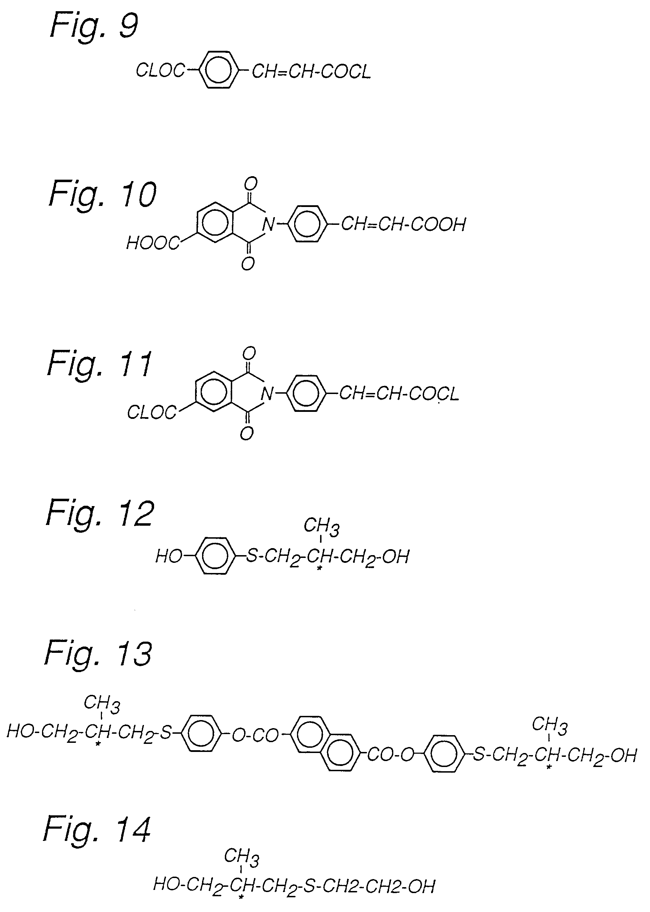

- Fig. 9 bis 14: Strukturformeln verschiedener Ausgangsverbindungen zur Darstellung der Polymere nach der Tabelle gemäß Figur 2.

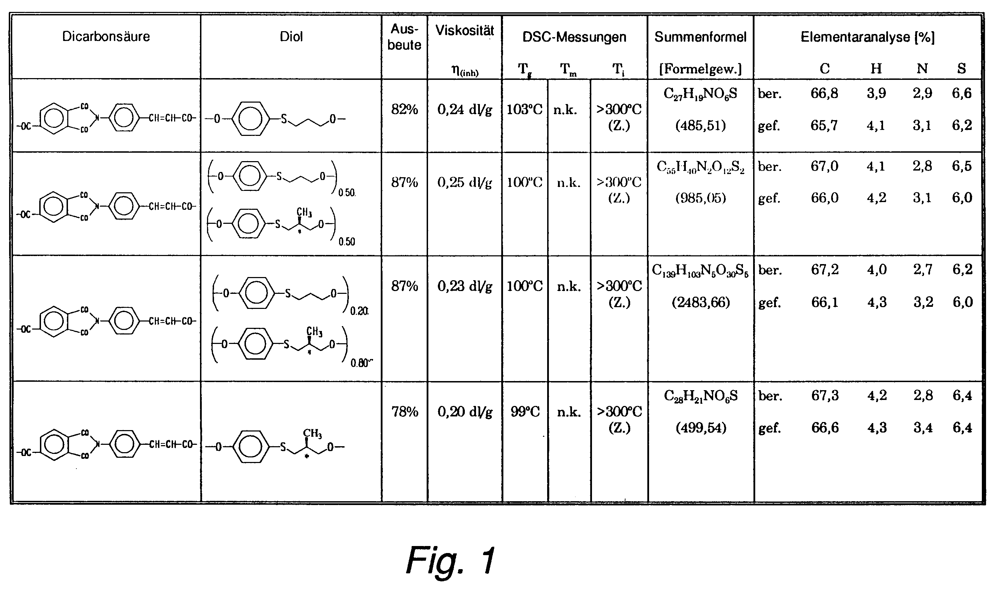

In der Tabelle nach Figur 1 sind in den einzelnen Tabellenzeilen vier verschiedene Polymere aufgeführt, die jeweils aus ein und der selben Dicarbonsäure - deren Strukturformel ist in der ersten Spalte von links angegeben - und unterschiedlichen Diolen synthetisiert sind. Und zwar sind bei der Synthese unterschiedliche Gemische von zwei verschiedenen Diolen eingesetzt, die in der zweiten Spalte von links angegeben sind. Das eine der beiden eingesetzten Diole - nachfolgend Diol K genannt - weist einen Propanrest auf und hat kein Chiralitätszentrum. Das andere der beiden eingesetzten Diole - es sei Diol M genannt - weist eine Methylgruppe auf, an der sich ein Chiralitätszentrum ausbildet, welches in der Strukturformel durch ein Sternchen (*) angedeutet ist. Der Anteil der beiden Diole in den vier verschiedenen Zeilen ist variiert, und zwar ist in dem untersuchten Beispiel gemäß der ersten Tabellenzeile 100 % Diol K und Null Prozent Diol M eingesetzt. In den Beispielen gemäß der zweiten und dritten Tabellenzeile sind Diol K und Diol M im Verhältnis 50 zu 50 bzw. im Verhältnis 20 zu 80 verwendet. Schließlich wurde im Beispiel nach der vierten Tabellenzeile nur noch Diol M eingesetzt, der Anteil des Diols K ist hier also Null. Durch den Vergleich der vier verschiedenen, gewonnenen Polymere kann gesagt werden, daß die Tauglichkeit des erhaltenen Polymers für die Zwecke der vorliegenden Erfindung um so besser ist, je größer der Anteil des Diols M mit dem Chiralitätszentrum bei der Synthese des Polymers ist. Die mehr oder weniger gute Tauglichkeit zeichnet sich zum einen dadurch aus, daß der Interferenzeffekt des Polymers mehr oder weniger kräftig und die Interferenzfarbe mehr oder weniger intensiv ist. Zum anderen erweist sich die mehr oder weniger gute Tauglichkeit auch dadurch, daß die Interferenzfarben über einen mehr oder weniger breiten Bereich des Farbspektrums hinweg thermisch beeinflußbar sind. Von den in der Tabelle nach Figur 1 angegebenen Polymeren ist also das in der letzten Tabellenzeile aufgeführte Polymer am besten geeignet. Es handelt sich dabei um das weiter oben bereits angesprochene und nachfolgend noch näher behandelte Polymer 5.

Der Vollständigkeit halber sei noch kurz auf die anderen Spalten der Tabelle nach Figur 1 eingegangen, soweit die Angaben im Spaltenkopf nicht von sich aus klar verständlich sind: in der vierten Spalte von links ist jeweils die inhärente Viskosität angegeben, wobei für die Meßbedingungen gilt in TFA:CH₂Cl₂/1:9 mit c gleich 2 g/l bei 20 °C. In dem Spaltentripel der fünften Spalte von links ist unter T_{g} die Glastemperatur aufgeführt; unter Tₘ (melting temperature) konnte keine Angabe gemacht werden, weil die Polymere alle nicht kristallin - "n.k." - sind. Auch eine Isotropierungstemperatur Tᵢ ist hier nicht angegeben, weil die optische Anisotropie der Polymere bis zu der etwa bei 300 °c beginnenden Zersetzung - Hinweis (Z.) - der Polymere aufrecht erhalten blieb.

In der Tabelle nach Figur 2 ist eine Übersicht über weitere Beispiele von photovernetzbaren Homo- und Copolymeren gegeben, die für die Zwecke der vorliegenden Erfindung geeignet sind. Die in den ersten vier Tabellenzeilen angegebenen Polymere - Polymere 1 bis 4 - sind unter einer als Variante A bezeichneten Methode synthetisiert worden, nämlich durch Lösungskondensation in Pyridin/1,2-Dichlorethan mit 1:2 Vol.-%. Die in den letzen beiden Tabellenzeilen aufgeführten Polymere 5 und 6 sind nach einer Variante B, nämlich einer Lösungskondensation in N-Methylpyrrolidon/Pyridin mit 2:1 Vol.-% synthetisiert. In der dritten Spalte von links ist die erhaltene Ausbeute in Prozent angegeben. Spalte vier von links erwähnt wiederum die inhärente Viskosität, gemessen in CH₂Cl₂/Trifluoressigsäure bei 4:1 Vol.-% mit c=2 g/l bei 20°C. In Spalte fünf von links ist der optische Drehwert des jeweiligen Polymers aufgeführt, der für die Polymere 2 bis 5 in CH₂Cl₂/Trifluoressigsäure bei 4:1 Vol.-% mit c=2 g/100ml bei 20°C gemessen wurde, wogegen die Messung für die Polymere 1 und 6 in CHCl₃ mit c=2 g/100ml bei 20°C erfolgte. Die Angaben in den Spalten "Summenformel" und "Elementaranalyse" dürften ohne weiteres klar sein; in der letzten Spalte sind den rechnerischen, mit "ber." bezeichneten Werten zum einen die gemessenen, mit "gef.:" bezeichneten Analysewerten zum anderen jeweils gegenübergestellt.

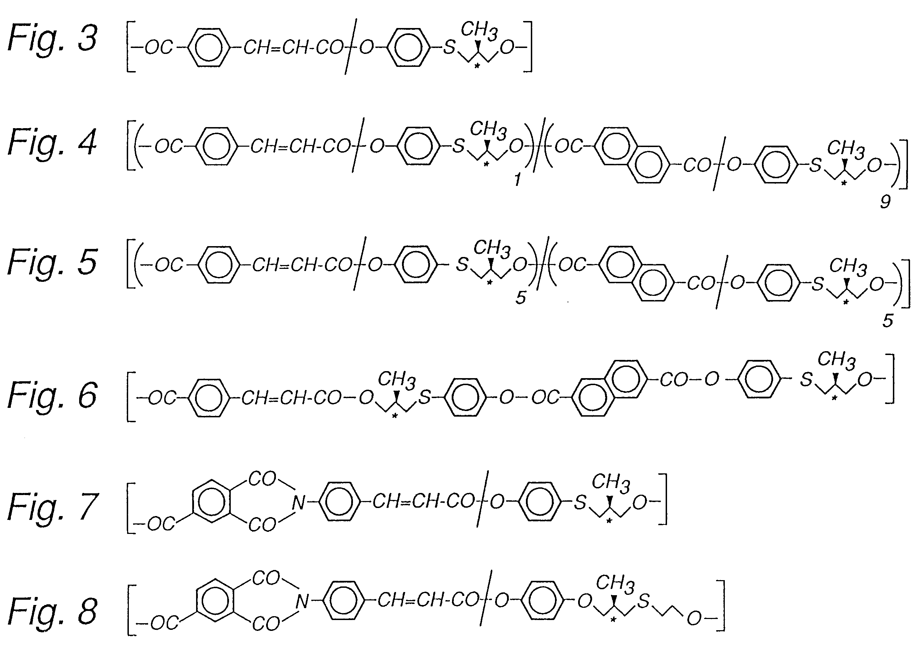

In der nachfolgenden Tabelle sind noch thermische Daten für diese sechs verschiedenen Polymere sowie die Zuordnung der zugehörigen Figur mit der Strukturformel aufgeführt. Zur Bedeutung der einzelnen Temperatursymbole sei kurz erwähnt: T_{g} ist die Glastemperatur, T_{ch} die Chiralisierungstemperatur d.h. die Temperatur, bei der beim Aufheizen die Moleküle sich in eine chiral nematische Ordnung einzuordnen beginnen; Tᵢ ist die Isotropierungstemperatur. Die hier für die Polymere 1 bis 5 angegebenen Isotropierungstemperaturen dürften mit der Zersetzungstemperatur dieser Polymere etwa übereinstimmen, weil auch bei der beginnenden Zersetzung sich eine Anisotropie verliert. Die Chiralisierungstemperaturen wurden nur in der ersten Aufheizkurve detektiert. Aus den Strukturformeln ist erkennbar, daß die Polymere alle - außer das in Figur 8 strukturell dargestellte Polymer 6 - mit dem weiter oben als Diol M bezeichneten Diol gebildet sind. Der Schrägstrich in den Strukturdarstellungen soll andeuten, aus welchen dies- und jenseits des Schrägstriches liegenden strukturell erkennbaren Ausgangsstoffen die Polymere gebildet sind.

| **Polymer [Nr.]** | **Strukturformel in** | **DSC- Messung T**_{**g**} **[°C]** | **DSC-Messung T**_{**ch**} **[°C]** | **DSC- Messung T**_{**i**} **[°C]** |
|---|---|---|---|---|
| **1** | Fig. 3 | 60 | - | 299 |
| **2** | Fig. 4 | 69 | - | 334 |
| **3** | Fig. 5 | 62 | - | 315 |
| **4** | Fig. 6 | 69 | 170 | 314 |
| **5** | Fig. 7 | 99 | 170 | 338 |
| **6** | Fig. 8 | 68 | 156 | 173 |

Nachfolgend ist die Synthetisierung der fotovernetzbaren Polymere 1 bis 4 mittels Lösungspolykondensation auf Basis von 3-(4-Chlorformylphenyl)propencarbonsäurechlorid und 2,6-Naphthalindicarbon-säurechlorid - weiter oben auch Variante "A" genannt - beschrieben:
In einem Lösungsmittelgemisch aus 20 ml trockenem 1,2-Dichlorethan und 10 ml trockenem Pyridin wird das jeweilige chirale Diol gelöst und im Eisbad auf 0°C gekühlt. Die Art des jeweiligen Diols und die erforderliche Einwaage sind weiter unten für jedes der Polymere 1 bis 4 gesondert angegeben. Nach Zugabe des festen Säurechlorids bzw. der Säurechloridmischung - auch diesbezüglich ist die Art des jeweils benötigten Säurechlorids bzw. der Säurechloride und das erforderliche Verhältnis unten angegeben - wird der Ansatz zwei Stunden unter Eis-Kühlung und Stickstoffspülung gerührt. Man erhöht die Temperatur auf 60°C und rührt weitere sechs Stunden. Die zähe Mischung wird nach Abkühlen auf Raumtemperatur in 1 l Methanol eingerührt, der Niederschlag abfiltriert und nacheinander mit Wasser und Aceton gewaschen. Das trockene Rohprodukt wird in Methylenchlorid/Trifluoressigsäure [4:1 Vol.%] gelöst, aus kaltem Methanol ausgefällt und bei 50°C im Vakuum getrocknet.

### Edukte für Polymer 1:

Diol: 18 mmol (R)-(-)-4-(Hydroxyphenyl)-(1-[3-hydroxy-2-methyl]-propyl)-sulfid
Säurechlorid: 18 mmol 3-(4-Chlorformylphenyl)propencarbonsäurechlorid

### Edukte für Polymer 2:

Diol: 18 mmol (R)-(-)-4-(Hydroxyphenyl)-(1-[3-hydroxy-2-methyl]-propyl)-sulfid
Säurechlorid 1: 1.8 mmol 3-(4-Chlorformylphenyl)propencarbonsäurechlorid
Säurechlorid 2: 16.2 mmol 2,6-Naphthalindicarbonsäurechlorid

### Edukte für Polymer 3:

Diol: 18 mmol (R)-(-)-4-(Hydroxyphenyl)-(1-[3-hydroxy-2-methyl]-propyl)-sulfid
Säurechlorid 1: 9 mmol 3-(4-Chlorformylphenyl)propencarbonsäurechlorid
Säurechlorid 2: 9 mmol 2,6-Naphthalindicarbonsäurechlorid

### Edukte für Polymer 4:

Diol: 9 mmol (R)-2,6-Bis({1-[4-Hydroxy-3-methyl-1-thio]butyl}-4-phenyl)naphthoat
Säurechlorid: 9 mmol 3-(4-Chlorformylphenyl)propencarbonsäurechlorid
Die beiden fotovernetzbaren Polymere 5 und 6 sind durch Lösungspolykondensation auf Basis von N-(4-[2-Chlorformylethenyl]phenyl)trimellitimidchlorid - weiter oben Variante "B" genannt - darstellbar, wobei in folgender Weise vorgegangen wird: Eine Lösung aus 15 mmol des chiralen Diols - die Art des jeweiligen Diols ist weiter unten für das Polymer 5 bzw. 6 angegeben - in 20 ml trockenem NMP und 10 ml Pyridin wird im Eisbad auf 0°C gekühlt und nach Zugabe von 15 mmol N-(4-[2-Chlorformylethenyl]phenyl)trimellit-imidchlorid zwei Tage lang bei dieser Temperatur unter Stickstoff gerührt. Anschließend erhöht man die Temperatur auf 90°C und rührt weitere zwei Stunden. Der auf Raumtemperatur abgekühlte Ansatz wird in 500 ml Methanol eingerührt, der feinpulverige Niederschlag abfiltriert und mit viel Wasser gewaschen. Man trocknet das Rohprodukt bei 80°C im Vakuum, löst in Methylenchlorid/Trifluoressigsäure [4:1 Vol%] und fällt in Methanol. Das abfiltrierte Polymer wird zwei Tage bei 80°C im Vakuum (12 mbar) getrocknet.

### Diol für Polymer 5:

(S)-(+)-4-(Hydroxyphenyl)-(1-[3-hydroxy-2-methyl]-propyl)-sulfid

### Diol für Polymer 6:

(S)-(+)-(1-[3-Hydroxy-2-methyl]-propyl)-(1-[2-hydroxy]-ethyl)-sulfid
Nachfolgend sei noch auf die chemische Darstellung der **Edukte** für die Synthetisierung der Polymere 1 bis 6 näher eingegangen: Für die Synthese der Polymere 1 bis 4 wird ein erstes Chlorid, nämlich ein **3-(4-Chlorformylphenyl)propencarbonsäurechlorid** benötigt. Die Strukturformel dieses Chlorides ist in **Figur 9** dargestellt. Dieses Chlorid 1 wird in die genannten Polymere bei der Strukturdarstellung der Figuren 3 bis 6 links von dem Schrägstrich unter Abgabe der Chloratome in die Molekülstruktur der Polymere eingebaut. Zur chemischen Darstellung dieses Chlorides wird eine Suspension von 18 g (93.67 mmol) handelsüblicher 3-(4-Carboxyphenyl)propencarbonsäure in 125 ml Thionylchlorid mit 1 ml Dimethylformamid versetzt und bis zum Ende der Blasenentwicklung unter Rückfluß gekocht. Man destilliert das überschüssige Thionylchlorid ab und kristallisiert das Rohprodukt aus Chloroform/Petrolether 60/70 [ca. 4:1 Vol%] um.
Ausbeute: 17.81 g (77.74 mmol) = 83 % des theoret. Wertes
Schmelzpunkt: 127-129°C
Werte der chemischen Verschiebung ¹H-NMR (CDCl₃/TMS):
- δ (ppm): = 6.77 (d, 1H), 7.71 (d, 2H), 7.86 (d, 1H),8.19 (d, 2H)

| Elementaranalyse: [%] | | C | H | Cl |
|---|---|---|---|---|
| C₁₀H₆O₂Cl₂ (290.062) | ber.: | 52.44 | 2.64 | 30.95 |
| | gef.: | 52.18 | 2.56 | 30.68 |

Für die Synthese der Polymere 5 und 6 wird ein anderes Chlorid, im Folgenden kurz Chlorid 2 genannt, nämlich N-(4-[2-Chlorformylethenyl]phenyl)trimellitimidchlorid eingesetzt. Dieses wiederum wird aus einem Trimellitimid, und zwar dem **N-(4-[2-Carboxyethenyl]phenyl)trimellitimid** gewonnen. Die Strukturformel dieses Trimellitimides ist in **Figur 10** dargestellt. Zur labormäßigen Gewinnung dieses Trimellitimides wird eine Lösung aus 50.46 g (0.26 mol) Trimellitsäureanhydrid und 48.50 g (0.24 mol) 4-Aminozimtsäurehydrochlorid in 450 ml trockenem Dimethylformamid auf 100°C erwärmt, mit 22.50 g (0.252 mol) Triethylamin versetzt und bei 120°C zwei Stunden gerührt. Anschließend werden 26.95 g (0.263 mol) Essigsäureanhydrid zugefügt und eine weitere Stunde bei 120°C gerührt. Man läßt auf Raumtemperatur abkühlen, versetzt mit 500 ml Diethylether und saugt den gelben Niederschlag ab. Nach Waschen mit 250 ml Aceton und 250 ml Diethylether wird das Rohprodukt aus Dioxan umkristallisiert.
Ausbeute: 43.1 g (0.13 mol) = 59 % des Theoretischen
Schmelzpunkt: > 310°C (Zersetzung)
Aus dem solcherart hergestellten Trimellitimid kann dann das eigentliche einzusetzende Chlorid, nämlich das **N-(4-[2-Chlorformylethenyl]phenyl)trimellitimidchlorid** gewonnen werden. Dessen Strukturformel ist in **Figur 11** dargestellt. Dieses Chlorid 2 wird in die Polymere 5 bzw. 6 bei der Strukturdarstellung der Figuren 7 bzw. 8 links von dem Schrägstrich ebenfalls unter Abgabe der Chloratome in die Molekülstruktur der Polymere eingelagert. Und zwar wird zur Gewinnung des Chlorids 2 eine Suspension von 43.1 g (0.13 mol) des N-(4-[2-Carboxyethenyl]phenyl)trimellitimides in 200 ml Thionylchlorid und 1 ml Dimethylformamid bis zum Ende der Blasenentwicklung unter Rückfluß gekocht. Anschließend wird soviel überschüssiges Thionylchlorid abdestilliert, daß das Säurechlorid eben noch in Lösung gehalten wird. Die 60°C warme Lösung wird in 1.5 l Petrolether 60/70 eingerührt, der hellgelbe Niederschlag wird abgesaugt, mit 500 ml Petrolether gewaschen und getrocknet.
Ausbeute: 30.61 g (0.08 mol) = 63 % des Theoretischen
Schmelzpunkt: 213 -215°C
Werte der chemischen Verschiebung ¹H-NMR (CDCl₃/TMS):
- δ (ppm): = 6.70 (d, 1 H), 7.68 (d, 2 H), 7.76 (d, 2H), 7.95 (d, 1H), 8.14 (d, 1 H), 8.58 (dd, 1 H), 8.72 (d, 1 H)

| Elementaranalyse: [%] | | C | H | N | Cl |
|---|---|---|---|---|---|
| C₁₈H₉NO₄Cl₂ (374.179) | ber.: | 57.78 | 2.42 | 3.74 | 18.95 |
| | gef.: | 57.79 | 2.56 | 3.64 | 19.01 |

In den Polymeren 1 bis 5 kommen Sulfidgruppen vor, die in den Strukturdarstellungen der Figuren 3 bis 7 rechts von dem bzw. von einem Schrägstrich unter Abgabe von Wasserstoffatomen in die entsprechenden Polymere eingelagert sind. Es handelt sich bei diesen als Edukte zum Einsatz gelangenden Sulfiden um die **4-(Hydroxyphenyl)-(1-[3-hydroxy-2-methyl]-propyl)-sulfide**, die in einer rechtsdrehenden und in einer linksdrehenden Version vorkommen; sie seien nachfolgend kurz Sulfide 1 genannt. Die in soweit für beide Versionen gleiche, zugehörige Strukturformel dieser beiden Sulfide zeigt **Figur 12.** Die Verwendung des einen oder des anderen dieser beiden Sulfide ist in freies Belieben gestellt, jedoch sollte sichergestellt sein daß nur eines der beiden Sulfide benutzt wird. Zur chemischen Darstellung dieser Sulfide wird eine Lösung aus 150 ml frisch destilliertem Ethanol, 50 ml entmineralisiertem Wasser und 7.48 g (0.19 mol) Natriumhydroxid 20 Minuten lang mit Stickstoff gesättigt. Zu der sauerstoffreien Lösung gibt man 22 g (0.174 mol) 4-Hydroxythiophenol sowie 0.17 mol (R)-(-)- bzw. (S)-(+)-3-Brom-2-methyl-1-propanol, d.h. in der rechtsdrehenden bzw. in der linksdrehenden Version dieser Halogenverbindung zu und läßt zwei Stunden bei 80°C rühren. Der Ansatz wird im Vakuum eingeengt, mit Wasser auf 500 ml aufgefüllt und nach der Zugabe von 5 ml konzentrierter Salzsäure zwei Tage im Rotationsperforator mit 1.5 l Diethylether extrahiert. Anschließend trennt man die etherische Phase ab, trocknet über Magnesiumsulfat und destilliert das Lösungsmittel im Rotationsverdampfer ab. Das verbliebene Öl wird im Hochvakuum (0.005 mbar) fraktioniert. Der Vorlagekolben ist nach Abzug der niedermolekularen Verunreinigungen mit flüssigem Stickstoff auf -190°C zu kühlen. Die Ausbeuten für das rechtsdrehende bzw. das linksdrehende Sulfid 1 sind unterschiedlich. Bei der Gewinnung des Sulfides 1 in der linksdrehenden Version unter Einsatz der Halogenverbindung (R)-(-)-3-Brom-2-methyl-1-propanol beträgt die Ausbeute 32.70 g (0.165 mol), was 97 % des Theoretischen entspricht. Der Drehwert
[α]_{D}²⁰ dieses Sulfides beträgt -3.5° (c = 2g/100 ml, CHCl₃); Minuszeichen für Linksdrehung. Bei der Synthese des rechtsdrehenden Sulfides 1 geht man von der Halogenverbindung (S)-(+)-3-Brom-2-methyl-1-propanol aus. Die Ausbeute beträgt hier 31.69 g (0.160 mol), d.h. 94 % des Theoretischen. Der völlig analoge Drehwert [α]_{D}²⁰ dieses Sulfides beträgt +3.5° (c = 2g/100 ml, CHCl₃); Pluszeichen für Rechtsdrehung. Der Brechungsindex n_{D}²⁰ der Sulfide 1 in beiden Versionen ist 1.5887. Die Werte δ (ppm) der chemischen Verschiebung
¹H-NMR (CDCl₃/TMS) betragen:
1.02 (d, 3 H), 1.72-2.12 (m, 1 H), 2.61-3.08 (m, 2H), 3.64 (d, 2 H), 4.00-4.70 (bs, 2 H), 6.75 (d, 2 H), 7.33 (d, 2 H)

| Elementaranalyse: [%] | | C | H | S |
|---|---|---|---|---|
| C₁₀H₁₄O₂S (198.280) | ber.: | 60.57 | 7.11 | 16.17 |
| | gef.: | 60.30 | 7.14 | 16.32 |

Für die Herstellung des Polymers 4 kommt ein Naphthoat als Edukt zum Einsatz, und zwar das **(R)-(-)-2,6-Bis({1-[4-Hydroxy-3-methyl-1-thio]butyl}-4-phenyl)naphthoat.** Dessen Strukturformel ist in **Figur 13** gezeigt. Dieses Naphthoat wird in dem rechts vom Schrägstrich in der Strukturdarstellung nach Figur 6 befindlichen Teil der Polymerstruktur des Polymers 4 unter Abgabe von Wasserstoffatomen eingelagert.

Für die Herstellung dieses Naphthoats wird eine Suspension von 6.89 g (34.75 mmol) des Sulfides 1 in der linksdrehenden Version, d.h. (R)-(-)-4-(Hydroxyphenyl)-(1-[3-hydroxy-2-methyl]propyl)-sulfid in 30 ml Wasser 20 Minuten lang im Stickstoffstrom von Sauerstoff befreit. Nach Zugabe von 1.46 g (36 mmol) Natriumhydroxid und 20 mg TEBA-Cl wird die Mischung mit Hilfe eines Ultra-Turrax-Rührers bis zur klaren Lösung gerührt. Anschließend fügt man unter starkem Rühren (10000 U/min) eine klare Lösung aus 4 g (15.8 mmol) 2,6-Naphthalindicarbonsäuredichlorid in 60 ml trockenem Methylenchlorid zu und rührt weitere 10 Minuten. Der ausgefallene Feststoff wird abfiltriert, mit Aceton gewaschen und aus Dioxan/Wasser [ca. 3:2 Vol.%] umkristallisiert.
Ausbeute: 8.25 g (14.30 mmol) = 90 % des Theoretischen
Schmelzpunkt: 196 - 198°C
Drehwert [α]_{D}²⁰: -17.99° (c = 2g/100 ml, Dioxan)
Werte der chemischen Verschiebung ¹H-NMR (CDCl₃/TFA 9:1):
- δ (ppm): = 1.15 (d, 6 H), 2.02-2.23 (m, 2 H), 2.99 (m, 4H), 4.39 (d, 4 H), 7.21 (d, 4 H), 7.47 (d, 2 H), 8.16 (d, 2 H), 8.30 (d, 2H), 8.88 (s, 2H)

| Elementaranalyse: [%] | | C | H | S |
|---|---|---|---|---|
| C₃₂H₃₂O₆S₂ (576.722) | ber.: | 66.64 | 5.59 | 11.12 |
| | gef.: | 66.17 | 5.51 | 11.00 |

Das Polymer 6 ist unter Verwendung eines anderen Sulfides, nachfolgend kurz Sulfid 2 genannt, als Edukt hergestellt, nämlich unter Verwendung von **(S)-(+)-(1-[3-Hydroxy-2-methyl]-propyl)-(1-[2-hydroxy]ethyl)-sulfid**, dessen Strukturformel in **Figur 14** dargestellt ist. Bei dessen Herstellung kann folgendermaßen vorgegangen werden: Eine Lösung aus 150 ml frisch destilliertem Ethanol und 3.21 g (0.133 mol) Natrium wird 20 Minuten im Stickstoffstrom von Sauerstoff befreit. Man versetzt die Lösung mit 0.132 mol 2-Hydroxyethylmercaptan und läßt 15 Minuten rühren. Anschließend wird dieser Lösung über einen Tropftrichter 20.04 g (0.131 mol) einer bereits in anderem Zusammenhang erwähnten Halogenverbindung, nämlich (S)-(-)-3-Brom-2-methyl-1-propanol in 20 ml Ethanol zugefügt. Man läßt weitere zwei Stunden bei 80°C rühren, versetzt mit 300 ml Wasser und engt im Vakuum (12 mbar) den Ansatz auf ein Volumen von 300 ml ein. Die verbliebene Suspension wird zwei Tage im Rotationsperforator mit 1.5 l Diethylether extrahiert. Man trennt die etherische Phase ab, trocknet zwei Stunden über Magnesiumsulfat und destilliert das etherische Lösungsmittel im Rotationsverdampfer ab. Das Rohprodukt wird im Vakuum (0.01 mbar) über einen luftgekühlten Kurzwegdestillationswinkel fraktioniert.
Ausbeute: 18.98 g (0.126 mol) = 95 % d. Th.
Brechungsindex n_{D}²⁰: 1.5063
Drehwert [α]_{D}²⁰: +14.6° (c = 2g/100 ml, CHCl₃)
Enantiomerenüberschuß (ee): 99.48 % (GC)
Werte der chemischen Verschiebung ¹H-NMR (CDCl₃/TMS):
- δ (ppm): = 1.00 (d, 3 H), 1.58-2.28 (m, 1 H), 2.35-2.88 (m, 6 H), 3.61 (d, 2 H), 3.75 (t, 2 H)

| Elementaranalyse: [%] | | C | H | S |
|---|---|---|---|---|
| C₆H₁₄O₂S (150.236) | ber.: | 47.97 | 9.39 | 21.34 |
| | gef.: | 47.78 | 9.55 | 21.31 |

Aus den gewonnenen Polymeren lassen sich Beschichtungen nach Art einer Lackierung auf Gegenständen herstellen, deren Farberscheinung nach der Applikation thermisch beeinflußt und auch verändert werden kann. Zur Gewinnung eines Beschichtungsstoffes wird eines der Polymere, vorzugsweise Polymer 5, in N,N-Dimethylformamid oder N-Methylpyrrolidon gelöst. Der Festkörperanteil beträgt etwa 20 Gew.-%. Der so hergestellte Lack kann entweder aufgerakelt oder aufgesprüht werden. Nach dem Abdunsten des Lösungsmittels, das bei Raumtemperatur oder aber auch bei höherer Temperatur (z.B. 70°C) geschehen kann, erhält man einen Film von etwa 10µm Dicke. Die Einstellung der gewünschten Farbe geschah durch Temperieren des beschichteten Substratkörpers auf einer Präzisionsheizplatte. So wurden beim Polymer 5 Reflexionswellenlängen im roten Bereich des sichtbaren Spektrums bei 171°C, grüne Reflexion bei 178°C, blaue Reflexion bei 190°C eingestellt. Durch rasches Abkühlen, z.B. durch Entfernen der beschichteten Substrate von der Heizplatte und Abkühlen lassen an Umgebungsluft aufgrund freier Konvektion (Abschrecken) kann die jeweils eingestellte Reflexionsfarbe stabilisiert werden. Die Vernetzung des Materials wird durch das Bestrahlen der beschichteten Probenkörper mit UV-Licht erreicht. Dazu werden z.B. beschichtete Prüfbleche auf dem Förderband einer UV-Härtungsanlage (DRS, UV-System F 450 der Firma Eltosch) plaziert und mit einer Geschwindigkeit von 15 m/min unter der UV-Lampe hindurchgeführt. Danach ändert sich die Farbe der Schicht bis zur Zersetzung des Materials nicht mehr (> 300^{o}C). Die so hergestellten Schichten weisen eine Vickers-Härte von etwa 300 N/mm² auf. Zum Vergleich: Für herkömmliche, besonders harte Zweikomponenten-Polyurethan-Lacke beträgt dieser Wert etwa 170-180 N/mm². Die erfindungsgemäßen, farbgebenden Lackschichten sind also nicht nur in ihrer Farberscheinung nachträglich, d.h. nach der Lackapplikation veränderbar, sondern weisen zugleich eine große Härte auf.

Es ergeben sich auch andere Anwendungsmöglichkeiten, die außerhalb der Lackiertechnik liegen, die jedoch hier der Vollständigkeit halber kurz angesprochen seien: Durch die hohe Gebrauchstemperatur ergibt sich die Möglichkeit der thermischen Strukturierung von Schichten des Materials (vorzugsweise Polymer 5). Durch Zufuhr von Wärme (z.B. CO₂-Laser, Heißluft etc.) und anschließendes rasches Abkühlen können Informationen in der Schicht fixiert werden. Dies können Schriftzüge oder aber nur Punkte sein. Die so strukturierten Schichten können somit als Informationsspeicher dienen und mit einer optischen sensitiven Schicht detektiert werden (Optoelektronik). Die Speicherung kann reversibel oder - nach einer Vernetzung des Materials - irreversibel sein. Eine weitere Möglichkeit zur thermischen Strukturierung besteht darin, bei einer auf eine Temperatur größer 170 und kleiner 200°C erhitzten Schicht (vorzugsweise aus Polymer 5) durch das Auflegen einer Form, die an den Berührungspunkten mit der Schicht für eine größere Wärmeabfuhr sorgt, als die umgebende Luft und dem anschließenden raschen Abkühlen Reflektionsfarben mit der Struktur der Form darzustellen. So war es möglich, auf einem schwarzen, mit Polymer 5 beschichteten Prüfblech, mit eingestellter blauer Reflektionswellenlänge durch kurzzeitiges Auflegen eines Mercedes-Sterns aus Metall diesen in grüner Reflektionswellenlänge abzubilden. Weitere Anwendungsmöglichkeiten sind Anwendungen als Polarisatoren und Filter in der Optik, die zerstörungsfreie Werkstoffprüfung (Wärmeflußverfahren), Anwendungen für die nichtlineare Optik, als organische Substrate in der Elektronik für die Faser- und Folientechnik.

## Patentansprüche

1. Farbiger, einen Lack-Körper enthaltenden Lack zum Lackieren von Gebrauchsgegenständen, insbesondere zum Außenlackieren von Fahrzeugkarosserien,
**dadurch gekennzeichnet,**
daß der Lack-Körper im wesentlichen aus einem aushärtbaren flüssigkristallinen Polymer (LCP) oder aus einem Gemisch verschiedener flüssigkristalliner Polymere besteht, wobei die farbliche Erscheinung des Lackes zumindest auch, vorzugsweise nur durch interferentiell wirkende, bei der Lack-Applikation unvernetzte und sich selbsttätig etwa quer zur Gegenstandsoberfläche ausrichtende Mesogene des Lack-Körpers bestimmt ist, welche Mesogene die Eigenschaft besitzen, daß sie sich bei Aufbringung auf eine Substratoberfläche selbsttätig näherungsweise chiral-nematisch anordnen und die ferner die Eigenschaft besitzen, daß sie in dieser Anordnung eine in ihrer Ganghöhe thermisch beeinflußbare Helix bilden, wobei das/die flüssigkristalline(n) Polymer(e) zum einen derart ausgewählt ist/sind, daß es/sie thermisch nicht vernetzbar ist/sind und zum anderen derart ausgewählt ist/sind, daß das Temperaturniveau, bei dem die Ganghöhe der Helix beeinflußbar ist, oberhalb der Gebrauchstemperatur des zu lackierenden Gebrauchsgegenstandes liegt.

2. Lack nach Anspruch 1,
**dadurch gekennzeichnet**,
daß das/die flüssigkristalline(n) Polymer(e) Hauptketten-Polymere und die Mesogene Hauptketten-Mesogene sind.

3. Lack nach Anspruch 1,
**dadurch gekennzeichnet**,
daß das/die flüssigkristalline(n) Polymer(e) Polyester sind.

4. Vorzugsweise mehrlagig lackierter Gebrauchsgegenstand, insbesondere Fahrzeugkarosserie, mit im Lack-Körper der farbbestimmenden Lacklage der Lackierung angeordneter, die gewünschte Farbtönung des Gebrauchsgegenstandes bestimmender Substanz,
**dadurch gekennzeichnet,**
daß die farbbestimmende Substanz des Lack-Körpers und die wesentliche Substanz des Lack-Körpers selber identisch sind und eine zusammenhängend-homogene Lage aus einem ausgehärteten flüssigkristallinen Polymer (LCP) oder aus einem Gemisch verschiedener flüssigkristalliner Polymere bilden, wobei die farbliche Erscheinung der farbbestimmenden Lacklage zumindest auch, vorzugsweise nur durch interferentiell wirkende, etwa quer zur Gegenstandsoberfläche ausgerichtete Mesogene des Lack-Körpers bestimmt ist, welche Mesogene näherungsweise chiral-nematisch geordnet sind und eine in ihrer Ganghöhe thermisch beeinflußbare Helix bilden, wobei das/die flüssigkristalline(n) Polymer(e) zum einen derart ausgewählt sind, daß sie thermisch nicht vernetzbar sind und zum anderen derart ausgewählt sind, daß das Temperaturniveau, bei dem die Ganghöhe der Helix beeinflußbar ist, oberhalb der Gebrauchstemperatur des zu lackierenden Gebrauchsgegenstandes liegt.

5. Gebrauchsgegenstand nach Anspruch 4,
**dadurch gekennzeichnet**,
daß das/die flüssigkristalline(n) Polymer(e) Hauptketten-Polymere und die Mesogene Hauptketten-Mesogene sind.

6. Gebrauchsgegenstand nach Anspruch 4,
**dadurch gekennzeichnet**,
daß das/die flüssigkristalline(n) Polymer(e) Polyester sind.

7. Gebrauchsgegenstand nach Anspruch 4,
**dadurch gekennzeichnet,**
daß der die farbbestimmende, interferentiell wirkende Lacklage tragende Untergrund dunkelfarbig, vorzugsweise schwarz ist.

8. Gebrauchsgegenstand nach Anspruch 4,
**dadurch gekennzeichnet,**
daß der die farbbestimmende, interferentiell wirkende Lacklage tragende Untergrund in der selben Farbtönung gehalten ist wie ein interferentieller Farbton der farbbestimmenden Lacklage.

9. Gebrauchsgegenstand nach Anspruch 4,
**dadurch gekennzeichnet,**
daß der die farbbestimmende, interferentiell wirkende Lacklage tragende Untergrund mit einer die Orientierung der Polymermoleküle in die flüssigkristalline, chiral-nematische Anordnung begünstigenden Zwischenschicht aus chemisch artverwanden Stoff, vorzugsweise aus einem Polyimid versehen ist.

10. Verfahren zum farbgebenden Lackieren eines Gebrauchsgegenstandes insbesondere beim Aufbringen der farbbestimmenden Lacklage in der Außenlackierung von Fahrzeugkarosserien, bei dem die farbbestimmende Lacklage in der gewünschten Lagenstärke auf die Oberfläche des Gebrauchsgegenstandes aufgetragen und die Lackschicht ausgehärtet wird,
**gekennzeichnet durch** die Verwendung eines Lackes für die farbbestimmende Lacklage gemäß den Merkmalen a) und b) und eine Verarbeitung dieses Lackes gemäß den Merkmalen c), d) und e):
a) der Lack-Körper des Lackes für die farbbestimmende Lacklage besteht im wesentlichen aus einem aushärtbaren flüssigkristallinen Polymer (LCP) oder aus einem Gemisch verschiedener flüssigkristalliner Polymere, wobei die Mesogene des Lack-Körpers die Eigenschaft besitzen, daß sie sich bei oder nach Aufbringung auf eine Substratoberfläche näherungsweise chiral-nematisch anordnen und eine in ihrer Ganghöhe thermisch, und zwar innerhalb eines bestimmten Temperaturbereiches beeinflußbare Helix bilden,
b) das/die den Lack-Körper bildende(n) flüssigkristalline(n) Polymer(e) ist/sind zum einen derart ausgewählt, daß sie thermisch nicht vernetzbar sind und zum anderen derart ausgewählt, daß der Temperaturbereich, bei dem die Ganghöhe der Helix beeinflußbar ist, oberhalb der Gebrauchstemperatur des zu lackierenden Gebrauchsgegenstandes liegt,
c) aufgrund einer Fließ- oder Scherbewegung des Lackes auf dem Untergrund bei der Applikation wird ein selbsttätiges Ausrichten der Mesogene des Lack-Körpers etwa quer zur Gegenstandsoberfläche ausgelöst,
d) durch Erwärmung der applizierten, aber noch unvernetzten Lackschicht auf eine bestimmte, innerhalb des genannten Temperaturbereiches liegende Temperatur wird die aufgetragene Lackschicht auf eine bestimmte, interferentiell wirksame Farbwirkung in-situ, d.h. erst auf dem Gebrauchsgegenstand eingestellt,
e) durch ein gegenüber der Aufheizgeschwindigkeit der Lackschicht wesentlich rascheres Abkühlen derselben und/oder durch UV-Bestrahlung der Lackschicht wird die thermisch eingestellte Helix der flüssigkristallinen Polymere und somit die interferentielle Farbwirkung stabilisiert.

11. Verfahren nach Anspruch 10,
**dadurch gekennzeichnet**,
daß das/die flüssigkristalline(n) Polymer(e) Hauptketten-Polymere und die Mesogene Hauptketten-Mesogene sind.

12. Verfahren nach Anspruch 10,
**dadurch gekennzeichnet**,
daß das/die flüssigkristalline(n) Polymer(e) Polyester sind.

13. Verfahren nach Anspruch 10,
**dadurch gekennzeichnet**,
daß vor dem Aufbringen der farbbestimmenden, interferentiell wirkenden Lacklage auf den tragenden Untergrund dieser mit einer die Orientierung der Polymermoleküle in die flüssigkristalline, chiral-nematische Anordnung begünstigenden Zwischenschicht aus chemisch artverwandtem Stoff, vorzugsweise aus einem Polyimid versehen wird.

14. Verfahren nach Anspruch 10,
**dadurch gekennzeichnet**,
daß das Auftragen des farbestimmenden Lackes durch Sprühapplikation feiner Flüssigkeitströpfchen von in Lösemittel aufgelöster Lack-Körpersubstanz und durch Verdunsten des die Lack-Körpersubstanz lösenden Lösemittels erfolgt, wobei beim Auseinanderlaufen der Tröpfchenmasse auf der Gegenstandsoberfläche die ein selbsttätiges Ausrichten der Seitengruppen-Mesogene des Lack-Körpers etwa quer zur Gegenstandsoberfläche auslösende Fließbewegung des Lackes auf dem Untergrund hervorgerufen wird.

15. Verfahren nach Anspruch 10,
**dadurch gekennzeichnet**,
daß das Auftragen des farbestimmenden Lackes durch Aufschmelzen staubfeiner Partikel der Lack-Körpersubstanz auf die erwärmte Gegenstandsoberfläche erfolgt, wobei beim Auseinanderlaufen der geschmolzenen Partikelmasse auf der Gegenstandsoberfläche die ein selbsttätiges Ausrichten der Seitengruppen-Mesogene des Lack-Körpers etwa quer zur Gegenstandsoberfläche auslösende Fließbewegung des Lackes auf dem Untergrund hervorgerufen wird.

16. Verfahren nach Anspruch 10,
**dadurch gekennzeichnet**,
daß das Auftragen des farbestimmenden Lackes durch Aufrakeln von in Lösemittel aufgelöster Lack-Körpersubstanz auf die Gegenstandsoberfläche und durch Verdunsten des die Lack-Körpersubstanz lösenden Lösemittels erfolgt, wobei beim Aufrakeln des Lackes die ein selbsttätiges Ausrichten der Seitengruppen-Mesogene des Lack-Körpers etwa quer zur Gegenstandsoberfläche auslösende Scherbewegung des Lackes auf dem Untergrund hervorgerufen wird.

17. Verfahren nach Anspruch 10,
**dadurch gekennzeichnet**,
daß das Erwärmen der applizierten, aber noch unvernetzten Lackschicht auf eine bestimmte, innerhalb des genannten Temperaturbereiches liegende Temperatur zur In-situ-Einstellung einer bestimmten, interferentiell wirksamen Farbwirkung in einem das Werkstück aufnehmenden Heißluftofen erfolgt.

18. Verfahren nach Anspruch 10,
**dadurch gekennzeichnet**,
daß das Erwärmen der applizierten, aber noch unvernetzten Lackschicht auf eine bestimmte, innerhalb des genannten Temperaturbereiches liegende Temperatur zur In-situ-Einstellung einer bestimmten, interferentiell wirksamen Farbwirkung durch in der Zeitdauer und/oder der Intensität gezieltes Bestrahlen mit einem Wärmestrahler erfolgt.

19. Verfahren nach Anspruch 18,
**dadurch gekennzeichnet**,
daß das Werkstück mit einem Infrarotstrahl eines Kohlendioxid-Lasers bestrahlt wird.

20. Verfahren nach Anspruch 10,
**dadurch gekennzeichnet**,
daß das gegenüber der Aufheizgeschwindigkeit der Lackschicht wesentlich raschere Abkühlen der Lackschicht zum Stabilisieren derselben bezüglich der thermisch eingestellten Helix der flüssigkristallinen Seitenketten-Polymere, d.h. zum Stabilisieren der interferentiellen Farbwirkung durch freie Konvektion in auf Raumtemperatur temperierter Umgebungsluft erfolgt.

21. Verfahren nach Anspruch 10,
**dadurch gekennzeichnet**,
daß das gegenüber der Aufheizgeschwindigkeit der Lackschicht wesentlich raschere Abkühlen der Lackschicht zum Stabilisieren derselben bezüglich der thermisch eingestellten Helix der flüssigkristallinen Seitenketten-Polymere, d.h. zum Stabilisieren der interferentiellen Farbwirkung durch flächiges Kontaktieren mit einem gut wärmeleitenden, kühlen oder gekühlten Gegenstand erfolgt.

22. Verfahren nach Anspruch 10,
**dadurch gekennzeichnet**,
daß bei einem örtlich in unterschiedlichen Farbtönen zu lackierenden Gebrauchsgegenstand auf diesen die farbbestimmende Lackschicht zunächst als eine für alle Farbtöne einheitliche Lackschicht aufgetragen und - ohne zu vernetzen - ausgehärtet wird und daß erst anschließend die unterschiedlichen Farbtöne darin örtlich gezielt nach folgender Schrittfolge eingestellt werden:
▷ der gesamte Gebrauchsgegenstand und mit ihm die farbbestimmende Lackschicht werden zunächst gleichmäßig auf die einem ersten Farbton entsprechende Temperatur erwärmt und der diesem ersten Farbton zugeordnete Bereich örtlich gezielt und partiell durch UV-Bestrahlung der Lackschicht in der interferentiellen Farbwirkung stabilisiert, indem die flüssigkristallinen Seitenketten-Polymere in-situ vernetzt werden,
▷ danach werden der Gebrauchsgegenstand und mit ihm die farbbestimmende Lackschicht gleichmäßig auf die einem zweiten Farbton entsprechende Temperatur erwärmt und der diesem zweiten Farbton zugeordnete Bereich ebenfalls örtlich gezielte und partiell durch UV-Bestrahlung der Lackschicht in der Farbwirkung stabilisiert,
▷ im Fall von noch mehr unterschiedlichen Farbtönen wird die Lackschicht ganz analog auf eine neue, farbtonbestimmende Temperatur erwärmt und der diesem Farbton entsprechende Oberflächenbereich UV-bestrahlt und so weiter, bis alle Farbtöne und die gesamte Gegenstandsoberfläche auf diese Weise abgearbeitet sind bzw. ist.

23. Verfahren nach Anspruch 22,
**dadurch gekennzeichnet**,
daß die farbunterschiedlichen Oberflächenbereiche des Gebrauchsgegenstandes in der Reihenfolge derjenigen Temperaturen behandelt werden, die den zugehörigen Farbtönen bei der Einstellung der Helix-Ganghöhe entsprechen, und zwar vorzugsweise in aufsteigender Reihenfolge.
